# EUROPÄISCHE PATENTSCHRIFT

(11) **EP 2 587 106 B1**
(45) Veröffentlichungstag und Bekanntmachung des Hinweises auf die Patenterteilung: **22.04.2015**
(21) Anmeldenummer: 12185851.8
(22) Anmeldetag: 25.09.2012
(51) Int. Cl.: F16L 5/04, A62C 2/06

(54) **Brandschutzmanschette**
Fire protection sleeve
Manchette pare-feu

(30) Priorität: 27.10.2011 DE 102011085351
(43) Veröffentlichungstag der Anmeldung: 01.05.2013
(73) Patentinhaber: HILTI Aktiengesellschaft, 9494 Schaan (LI)
(72) Erfinder: Förg, Christian, 86862 Dillishausen (DE); Münzenberger, Herbert, 65191 Wiesbaden (DE)
(74) Vertreter: Hilti Aktiengesellschaft Corporate Intellectual Property

(56) Entgegenhaltungen:
- WO-A1-00/68608
- GB-A- 2 388 174

## Beschreibung

Die Erfindung betrifft eine Brandschutzmanschette mit einem Gehäuse, das eine Einlage aus intumeszierender Brandschutzmasse aufnehmen kann, und mindestens einem Halter, mit dem das Gehäuse an einem Untergrund befestigt werden kann.

Brandschutzmanschetten dienen dazu, Wanddurchbrüche für schmelzende oder brennbare Leitungen, beispielsweise Rohre oder Kabel im Brandfall abzudichten. Eine solche Brandschutzmanschette weist eine Einlage aus intumeszierender Brandschutzmasse (im Folgenden auch als Intumeszenzeinlage bezeichnet) auf, die um die Leitung gelegt werden kann, sowie ein Gehäuse, in das die Intumeszenzeinlage eingelegt ist. Bei starker Hitze, beispielsweise bei einem Brand, dehnt sich die Intumeszenzeinlage aus, schließt den Wanddurchbruch dadurch hermetisch ab und verhindert so eine Ausbreitung von Feuer oder Rauch durch den Wanddurchbruch. Das Gehäuse dient dazu, die Intumeszenzeinlage an seiner Position am Wanddurchbruch zu fixieren und sicherzustellen, dass diese sich bei einem Brandfall derart ausbreitet, dass der Wanddurchbruch vollständig verschlossen wird. Die Brandschutzmanschette kann natürlich auch an einem Deckendurchbruch verwendet werden. Der Einfachheit halber wird nachfolgend jedoch immer nur von Wand bzw. Wanddurchbruch gesprochen.

Eine solche Brandschutzmanschette ist beispielsweise aus der DE 198 52 120 A1 bekannt. Das Gehäuse weist in Umfangsrichtung eine Unterbrechung auf, so dass das Gehäuse mit der darin eingelegten Intumeszenzeinlage um die Leitung gelegt werden kann. An einem umfangsmäßigen Ende des Gehäuses sind Laschen vorgesehen, die in Aussparungen am gegenüberliegenden Ende eingeschoben werden können, um das Gehäuse in Umfangsrichtung zu schließen. Die Befestigung dieser Brandschutzmanschette in einem Wanddurchbruch erfolgt über Haken, die in ein axiales Ende des durch das Gehäuse gebildeten Zylinders eingehakt werden. Diese Haken überdecken zudem die Laschen auf der Gehäuseaußenseite und bilden somit eine Sicherung für den Verschluss des Gehäuses. Dies hat zum einen den Nachteil, dass die Montage der Manschette sehr aufwendig ist, da gleichzeitig der Umfang der Manschette eingestellt und der Haken befestigt werden muss. Zudem greifen die Haken in den Innenraum ein, so dass sie an der Leitung anliegen und eine ungestörte Ausbreitung der Intumeszenzeinlage verhindern können.

Eine weitere Manschette ist aus der WO 2000/68608 A1 bekannt. Bei dieser werden die Befestigungshaken in Mittel zur Aufnahme der Haken auf dem Außenumfang in axialer Richtung aufgeschoben, was den Nachteil hat, dass nur in einer Richtung eine sichere Verbindung mit dem Befestigungshaken hergestellt ist. Das Gehäuse mit der Intumeszenzeinlage kann in die jeweils andere Richtung gegen die Haken verschoben werden, so dass es möglich ist, die Manschette von den Haken herunterzuschieben.

Eine Manschette nach dem Oberbegriff des Anspruch 1 ist aus der GB 2 388 174 A bekannt.

Aufgabe der Erfindung ist es, eine Manschette bereitzustellen, die eine einfache und zuverlässige Montage ermöglicht.

Zur Lösung der Aufgabe ist bei einer Brandschutzmanschette mit einem Gehäuse, das eine Einlage aus intumeszierender Brandschutzmasse aufnehmen kann, und mindestens einem Halter, mit dem das Gehäuse an einem Untergrund befestigt werden kann, vorgesehen, dass der Halter mittels einer Rastverbindung am Gehäuse befestigt ist, die durch eine Bewegung des Halters von außen in Richtung zur Mitte des Gehäuses hergestellt wird. Die Halter greifen bei dieser Brandschutzmanschette nicht in den Innenraum ein, so dass diese nicht an der Intumeszenzeinlage anliegen und dessen Ausbreitung im Brandfall verhindern können. Das gehäuse ist mit mindestens zwei Rasthaken versehen. Da die Halter auf der Außenseite einfach über eine Rastverbindung aufgesteckt werden können, ist eine einfache und schnelle Montage der Halter am Gehäuse möglich.

Vorzugsweise weist der Halter mindestens zwei Rasthaken auf. Diese können gegeneinander gerichtet sein, so dass diese beim Montieren des Halters am Gehäuse voneinander weg gedrückt werden. Alternativ können die Rasthaken voneinander weg gerichtet sein, so dass diese aufeinander zu gedrückt werden. Dadurch werden die Rasthaken beim Aufsetzen auf ein am Gehäuse vorgesehenes Widerlager gegeneinander vorgespannt, wodurch der Halter über die Rasthaken sicher gehalten ist.

Zudem ist durch zwei voneinander beabstandete Rasthaken eine exakte Positionierung des Halters möglich, so dass dieser bei der Montage nicht wegknicken kann.

Am Halter ist ein entsprechendes Widerlager vorgesehen, in dem die Rasthaken verrasten können.

Vorzugsweise sind diese Rasthaken einander paarweise gegenüberliegend angeordnet. Diese können beispielsweise gegeneinander gerichtet sein, so dass diese den Halter bzw. ein am Gehäuse vorgesehenes Widerlager zwischen sich aufnehmen können. Alternativ können die Rasthaken auch voneinander weg gerichtet sein und mit jeweils einem Rasthaken des Halters oder des Gehäuses verhaken. Es ist auch denkbar, dass sowohl am Gehäuse wie auch am Halter miteinander zusammenwirkende Rasthaken vorgesehen sind.

Das Gehäuse besteht beispielsweise aus mehreren relativ zueinander biegbaren Segmenten, wobei die am Gehäuse vorgesehenen einander gegenüberliegenden Rasthaken, mit Ausnahme der Endabschnitte des Gehäuses, auf einem Segment angeordnet sind. Wären die Rasthaken auf zwei zueinander biegsamen Segmenten angeordnet, würde durch das Biegen der Abstand der Rasthaken zueinander verändert werden, so dass die Vorspannung der Rasthaken verloren gehen kann und ein ausreichender Halt des Hakens am Gehäuse nicht gewährleistet ist. Da beide Rasthaken auf einem Segment angeordnet sind, ist sichergestellt, dass der Abstand der Rasthaken, und somit die bei aufgesetztem Halter bereitgestellte Haltekraft, jeweils gleichbleibend ist, so dass eine sichere Verbindung mit dem Halter gewährleistet ist.

An den Rasthaken können Positionierungsvorsprünge vorgesehen sein, die ein Relativverschieben zwischen Halter und Gehäuse begrenzen. Diese können beispielsweise verhindern, dass der Halter in axialer Richtung aus der Rastverbindung herausgeschoben werden kann. Diese Positionierungsvorsprünge können aber auch dazu beitragen, Unebenheiten im Untergrund, auf dem die Brandschutzmanschette moniert werden soll, auszugleichen.

Statt den am Gehäuse vorgesehenen Rasthaken ist es beispielsweise auch denkbar, dass am Gehäuse Aussparungen für Rasthaken vorgesehen sind, die am Halter angebracht sind. Diese Aussparungen bilden ein Widerlager für die Rasthaken. Dies hat den Vorteil, dass das Gehäuse außenseitig keine Vorsprünge aufweist, die bei der Montage in einem Wanddurchbruch vorstehen und ein Einschieben der Brandschutzmanschette behindern könnten.

In einer weiteren Ausführungsform übergreift die Rastverbindung einen Spalt des Gehäuses und schließt dadurch das Gehäuse in Umfangsrichtung. Die Rastverbindung bzw. der Halter haben also zusätzlich die Funktion, das Gehäuse in Umfangsrichtung zu schließen. Dazu sind die Rasthaken am Halter bzw. die Widerlager am Gehäuse so ausgebildet, dass die Ränder des Gehäuses beim Aufsetzen des Halters aufeinander zu beaufschlagt werden, so dass die Rasthaken des Halters das Gehäuse an den Rändern gewissermaßen zuziehen.

An den einander am Spalt gegenüberliegenden Enden des Gehäuses ist vorzugsweise ein Anschlag vorgesehen, der die Position der Ränder relativ zueinander festlegt. Wären diese Enden nicht vorgesehen, würden die Ränder des Gehäuses beim Aufsetzen des Halters durch die Rasthaken aufeinander zugezogen, so dass die Vorspannung der Rasthaken verloren geht. Dies hätte zu Folge, dass der Halter nicht am Gehäuse fixiert werden kann. Zudem würde in diesem Fall das Gehäuse nicht durch den Halter geschlossen. Durch die Vorspannung der Rasthaken werden die Enden des Gehäuses gegen den Anschlag gedrückt und so sicher gegeneinander positioniert.

Der Halter weist vorzugsweise ein Langloch auf, so dass eine flexible Montage an einem Untergrund möglich ist.

Weitere Vorteile und Merkmale ergeben sich aus der nachfolgenden Beschreibung in Verbindung mit den beigefügten Zeichnungen. In diesen zeigen:
- Fig. 1:: eine schematische Darstellung einer erfindungsgemäßen Brandschutzmanschette,
- Fig. 2:: eine Detailansicht des Halters der Brandschutzmanschette aus Figur 1,
- Fig. 3:: eine detaillierte Darstellung der Brandschutzmanschette aus Figur 1,
- Fig. 4:: die Brandschutzmanschette aus Figur 3 in einem Zwischenmontagezustand,
- Fig. 5:: eine weitere Ausführungsform eines Halters für eine erfindungsgemäße Brandschutzmanschette, und
- Fig. 6:: ein Gehäuse für eine zweite Ausführungsform einer erfindungsgemäßen Brandschutzmanschette in einem Zwischenherstellungs-zustand.

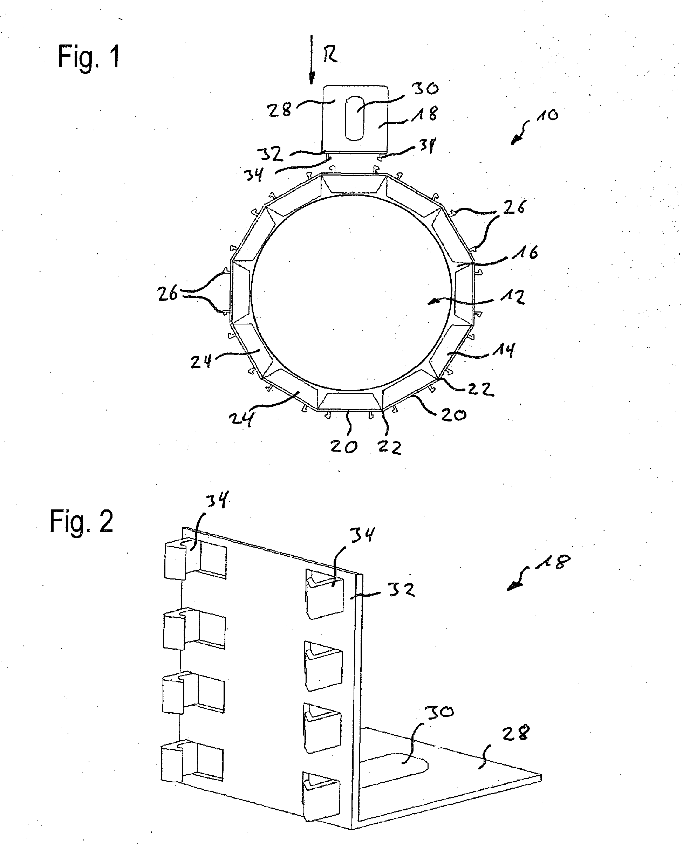

Figur 1 zeigt eine Brandschutzmanschette 10 zum Schließen eines Wanddurchbruchs für eine Leitung. Die Brandschutzmanschette 10 definiert einen Innenraum 12, in den eine Leitung, beispielsweise ein Rohr oder ein Kabel, eingelegt werden kann. Die Brandschutzmanschette 10 hat ein Gehäuse 14, in das innenseitig eine Einlage aus intumeszierender Brandschutzmasse 16 eingelegt ist. Des Weiteren sind mehrere Halter 18 vorgesehen, um die Brandschutzmanschette 10 am Untergrund zu fixieren. Der Einfachheit halber ist hier nur ein Halter 18 dargestellt.

Die Brandschutzmanschette 10 kann mit der darin eingelegten Leitung an einen Wanddurchbruch angesetzt werden, wodurch der Wanddurchbruch weitestgehend geschlossen ist. Anschließend wird das Gehäuse 14 mit den Haltern 18 am Wanddurchbruch fixiert, so dass ein Verschieben der Brandschutzmanschette 10 verhindert ist. Die Einlage aus intumeszierender Brandschutzmasse 16 kann sich bei Hitzeeinwirkung derart ausdehnen, dass durch diese der Wanddurchbruch hermetisch abgedichtet wird, um den Durchtritt von Rauch oder Feuer zu verhindern.

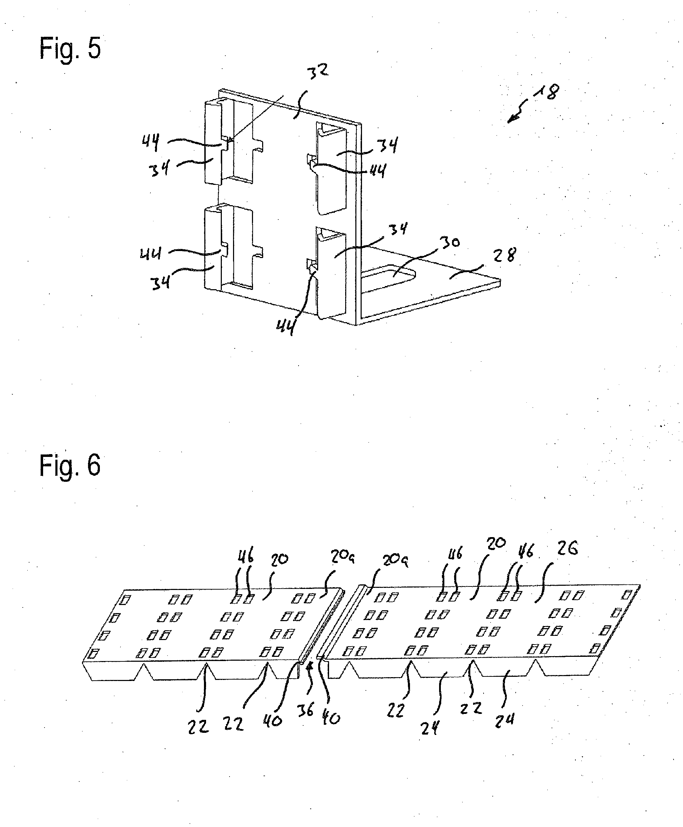

Das Gehäuse 14 ist aus einem ebenen Blech geformt (siehe auch Figur 6), wobei in regelmäßigen Abständen biegsame Bereiche 22 vorgesehen sind, durch die das Blech in mehrere relativ zueinander biegbare Segmente 20 unterteilt ist, die in zusammengesetztem Zustand des Gehäuses 14 ein regelmäßiges Polygon bilden (siehe Figur 1).

In axialer Richtung sind an beiden Enden jedes Segments 20 Laschen 24 vorgesehen, die rechtwinklig nach innen abgebogen sind. Die Einlage aus intumeszierender Brandschutzmasse 16 ist zwischen den Laschen 24 des Gehäuses 14 angeordnet und durch diese gehalten, wobei die Einlage aus intumeszierender Brandschutzmasse 16 am gesamten Innenumfang des Gehäuses 14 umlaufend angeordnet ist.

Auf der Außenseite jedes Segments 20 sind jeweils zwei Rasthaken 26 vorgesehen, die paarweise gegenüberliegend angeordnet und voneinander weg gerichtet sind. Die Rasthaken dienen der Befestigung der Halter 18.

Die Laschen 24 sowie die Rasthaken 26 sind jeweils durch Biegen und/oder Stanzen aus dem Blech gebildet.

Die Halter 18 sind aus einem rechtwinklig umgebogenen Blech gebildet, wobei an einem ersten Schenkel 28 ein Langloch 30 vorgesehen ist, das der Befestigung des Halters 18 und somit der Brandschutzmanschette 10 am Untergrund dient. Am zweiten Schenkel 32 sind zwei Rasthaken 34 vorgesehen, die hier gegeneinander gerichtet und paarweise gegenüberliegend angeordnet sind. Der Abstand dieser Rasthaken 34 ist so gewählt, dass diese mit den Rasthaken 26 am Außenumfang des Gehäuses 14 korrespondieren. Die Rasthaken 34 sind ebenfalls durch Stanzen bzw. Umbiegen aus dem zweiten Schenkel 32 gebildet (siehe Figur 2).

Die Rasthaken 26, 34 bilden eine Rastverbindung, mit der der Halter 18 am Gehäuse 14 befestigt werden können. Dazu wird der Halter vor oder nach der Montage des Gehäuses 14 an einer Leitung in eine Montagerichtung R, die hier senkrecht zum jeweiligen Segment 20 verläuft, von außen in Richtung zur Mitte des Gehäuses 14 auf ein Segment 20 aufgesetzt und mit den Rasthaken 34 an den korrespondierenden Rasthaken 26 des Gehäuses verrastet. Anschließend können die Halter 18 am Untergrund befestigt werden. Die Befestigung der Halter 18 an dem Gehäuse 14 erfordert also kein zusätzliches Werkzeug oder zusätzliche Bauteile. Da in der hier gezeigten Ausführungsform an jedem der Segmente 20 Rasthaken 26 vorgesehen sind, ist zudem eine flexible Montage des Halter 18 und somit eine flexible Befestigung der Brandschutzmanschette 10 möglich. Es ist auch denkbar, dass mehrere Halter 18 verwendet werden, um eine sichere Montage der Brandschutzmanschette 10 zu gewährleisten. Wie in Figur 2 zu sehen ist, kann der Halter 18 auch mehrere paarweise gegenüberliegende Rasthaken 34 aufweisen. Die am Gehäuse 14 vorgesehenen Widerlager sind dementsprechend ausgebildet.

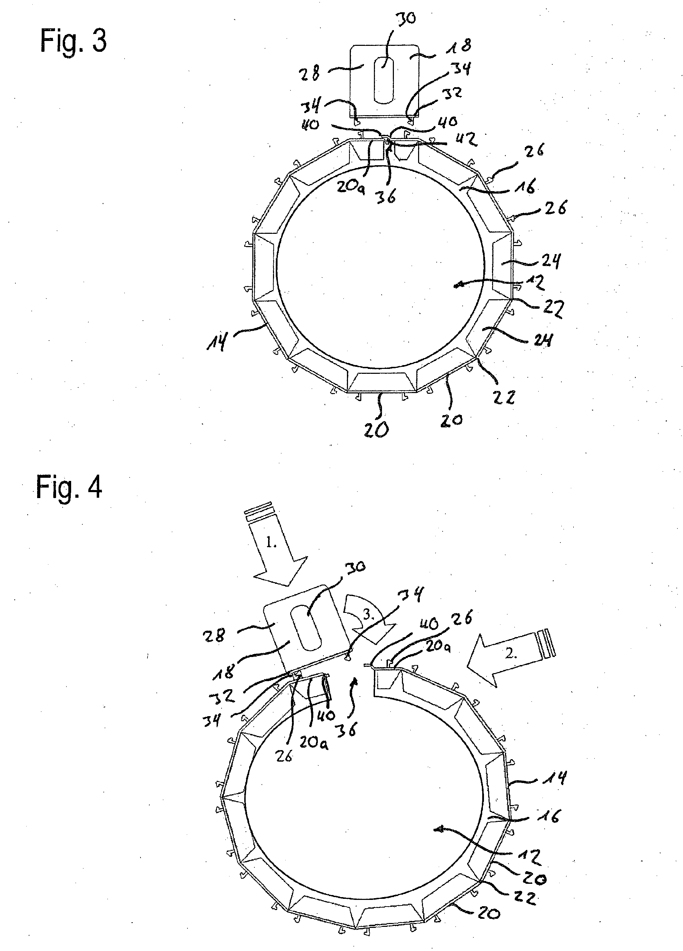

Das Gehäuse 14 kann wie im vorliegenden Fall durchgehend ausgebildet sein. Vorteilhafterweise ist aber am Gehäuse 14 an einem Segment 20 oder an einem Scharnier 22 ein Spalt 36 vorgesehen, an dem das Gehäuse 14 aufgebogen bzw. geschlossen werden kann (siehe Figur 3). Dadurch kann das Gehäuse 14 um eine Leitung herum gelegt und anschließend an diesem Spalt 36 geschlossen werden.

Ein Segment 20a ist in dieser Ausführungsform zweigeteilt, wobei die beiden Teile jeweils einen Endabschnitt 38 des Gehäuses bilden. Die Enden 40 dieser Endabschnitte 38 sind jeweils abgebogen, so dass ein Anschlag 42 gebildet ist, durch den die Position der Endabschnitte 38, wie im Folgenden dargestellt wird, relativ zueinander festgelegt ist.

Im in Figur 3 gezeigten zusammengesetzten Zustand ist auch am Segment 20a der Abstand der Rasthaken 26 so gewählt, dass diese mit den Rasthaken 34 des Halters 18 korrespondieren. In aufgesetztem Zustand drücken die Rasthaken 34 des Halters 18 die Rasthaken 26 und somit die Endabschnitte 38 gegeneinander, wobei durch die Anschläge 42 verhindert wird, dass die Endabschnitte 38 und somit die Rasthaken 26 aufeinander zu bewegt werden. Durch das Aufsetzen des Halters 18 wird also der durch die Endabschnitte 38 und die Anschläge 42 gebildete Verschluss des Gehäuses 14 vorgespannt und so sicher verschlossen.

Die Montage dieser Brandschutzmanschette 10 ist in Figur 4 dargestellt. Nachdem das Gehäuse 14 um eine Leitung herum gelegt ist, wird in einem ersten Montageschritt der Halter 18 an einen der Endabschnitte 38 herangeführt, so dass ein erster Rasthaken 34 mit dem an diesem Endabschnitt 38 vorgesehenen Rasthaken 26 verhakt. Anschließend wird der zweite Endabschnitt 38 gegen den ersten Endabschnitt 38 geführt und die Anschläge 42 relativ zueinander positioniert. Abschließend wird der Halter 18 um den bereits eingehakten Rasthaken geschwenkt, so dass auch die noch nicht eingehakten Rasthaken 34, 26 miteinander verrasten.

Eine weitere Ausführungsform eines Halters 18 ist in Figur 5 dargestellt. Der Aufbau dieses Halters 18 entspricht im Wesentlichen dem in Figur 2 gezeigten Halter 18. Zusätzlich sind hier aber an den Rasthaken 34 Positionierungsvorsprünge 44 vorgesehen. Diese können in entsprechende Aussparungen an den Segmenten 20 bzw. den Rasthaken 26 eingreifen, so dass ein Verschieben des Halters 18 am Gehäuse 14 senkrecht zur Montagerichtung verhindert ist. Die Positionierungsvorsprünge 44 lassen alternativ eine Variabilität in axialer Richtung (bezogen auf die umschlossene Leitung) beim Ineinandergreifen der Rasthaken 34 des Halters 18 und der Rasthaken 26 des Gehäuses 14 zu, so dass unebene Untergründe, auf denen die Brandschutzmanschette mittels der Halter 18 befestigt wird, in einem gewissen Maße ausgeglichen werden können. Je nach Anzahl und Abstand der in axialer Richtung angeordneten Rasthaken 34 des Halters 18 und je nach Breite der Positionierungsvorsprünge 44 können Unebenheiten bis zu mehreren Millimetern ausgeglichen werden.

Das Gehäuse 14 der hier gezeigten Ausführungsformen ist jeweils aus einem in ebenem Blech hergestellt, wobei die Rasthaken 26, die Laschen 24 sowie die Anschläge 42 jeweils durch Stanzen und/oder Biegen geformt sind.

In Figur 6 ist ein solches Blech für eine weitere Ausführungsform dargestellt. Diese unterscheidet sich von der in den Figuren 1 bis 4 gezeigten Ausführungsform darin, dass statt der Rasthaken 26 Aussparungen 46 vorgesehen sind, die Widerlager für die Rasthaken 34 der Halter 18 bilden. Dadurch weist das Gehäuse 14 außenseitig keine Vorsprünge auf, die bei der Montage des Gehäuses stören könnten. Zur Herstellung eines Gehäuses, wie es in der Ausführungsform gemäß der Figuren 1 bis 4 verwendet wird, werden statt der Aussparungen 46 Rasthaken 26 aus dem Blech heraus gestanzt.

## Patentansprüche

1. Brandschutzmanschette (10) mit einem Gehäuse (14), das eine Einlage aus intumeszierender Brandschutzmasse (16) aufnehmen kann, und mindestens einem Halter (18), mit dem das Gehäuse (14) an einem Untergrund befestigt werden kann, wobei der Halter (18) mittels einer Rastverbindung am Gehäuse (14) befestigt ist, die durch eine Bewegung des Halters (18) von außen in Richtung zur Mitte des Gehäuses (14) hergestellt ist, **dadurch gekennzeichnet, dass** das Gehäuse (14) mit mindestens zwei Rasthaken (26) versehen ist.

2. Brandschutzmanschette nach Anspruch 1, **dadurch gekennzeichnet, dass** der Halter (18) mit mindestens zwei Rasthaken (34) versehen ist.

3. Brandschutzmanschette nach Anspruch 2, **dadurch gekennzeichnet, dass** die Rasthaken (26, 34) einander paarweise gegenüberliegen.

4. Brandschutzmanschette nach Anspruch 3, **dadurch gekennzeichnet, dass** das Gehäuse (14) mehrere relativ zueinander biegbare Segmente (20) aufweist und dass die einander gegenüberliegenden Rasthaken (26), mit Ausnahme der Endabschnitte (38) des Gehäuses (14), auf einem Segment (20) angeordnet sind.

5. Brandschutzmanschette nach einem der Ansprüche 2 oder 3, **dadurch gekennzeichnet, dass** an den Rasthaken (26, 34) Positionierungsvorsprünge (44) vorgesehen sind.

6. Brandschutzmanschette nach einem der vorhergehenden Ansprüche, **dadurch gekennzeichnet, dass** das Gehäuse (14) mit Aussparungen (46) für Rasthaken (34) versehen ist, die am Halter (18) angebracht sind.

7. Brandschutzmanschette nach einem der vorhergehenden Ansprüche, **dadurch gekennzeichnet, dass** die Rastverbindung einen Spalt (36) des Gehäuses (14) übergreift und dadurch das Gehäuse (14) in Umfangsrichtung schließt.

8. Brandschutzmanschette nach Anspruch 7, **dadurch gekennzeichnet, dass** an den einander am Spalt (36) gegenüberliegenden Enden des Gehäuses (14) ein Anschlag (42) vorgesehen ist, so dass die beiden Enden relativ zueinander positioniert sind.

9. Brandschutzmanschette nach einem der vorhergehenden Ansprüche, **dadurch gekennzeichnet, dass** der Halter (18) mit einem Langloch (30) versehen ist.

## Claims

1. A fire protection sleeve (10) comprising an outer casing (14), capable of holding an insert made of an intumescent fire protection substance (16), and at least one bracket (18), by which the casing (14) can be fixed to a substrate, said bracket (18) being fixed to the casing (14) by means of a snap-in connection, which is established by moving the bracket (18) from the outside towards the middle of the casing (14), **characterized in that** the casing (14) is provided with at least two snap-in hooks (26).

2. A fire protection sleeve according to Claim 1, **characterized in that** the bracket (18) is provided with at least two snap-in hooks (34).

3. A fire protection sleeve according to Claim 2, **characterized in that** the snap-in hooks (26, 34) are located opposite one another in pairs.

4. A fire protection sleeve according to Claim 3, **characterized in that** the casing (14) comprises a number of segments (20) which are capable of bending relative to one another and **in that**, with the exception of the end portions (38) of the casing (14), the snap-in hooks located opposite one another are provided on a segment (20).

5. A fire protection sleeve according to one of Claims 2 or 3, **characterized in that** positioning tabs (44) are provided on the snap-in hooks (26, 34).

6. A fire protection sleeve according to one of the preceding claims, **characterized in that** the casing (14) is provided with recesses (46) for snap-in hooks (34) mounted on the bracket (18).

7. A fire protection sleeve according to one of the preceding claims, **characterized in that** the snap-in connection engages over a gap (36) in the casing (14), thus closing the casing (14) in circumferential direction.

8. A fire protection sleeve according to Claim 7, **characterized in that** a limit stop (42) is provided at the ends of the casing lying opposite one another at the gap (36) so that the two ends are positioned relative to one another.

9. A fire protection sleeve according to one of the preceding claims, **characterized in that** the bracket (18) is provided with a slot (30).

## Revendications

1. Manchon pare-feu (10) comportant un boîtier (14) qui peut recevoir un insert constitué d'une matière pare-feu intumescente (16), et au moins un support (18) au moyen duquel le boîtier (14) peut être fixé sur une surface sous-jacente, dans lequel le support (18) est fixé sur le boîtier (14) au moyen d'une liaison par encliquetage qui est obtenue par un déplacement du support (18) de l'extérieur vers le centre du boîtier (14), **caractérisé en ce que** le boîtier (14) est muni d'au moins deux crochets d'encliquetage (26).

2. Manchon pare-feu selon la revendication 1, **caractérisé en ce que** le support (18) est muni d'au moins deux crochets d'encliquetage (34).

3. Manchon pare-feu selon la revendication 2, **caractérisé en ce que** les crochets d'encliquetage (26, 34) sont agencés par paire l'un en face de l'autre.

4. Manchon pare-feu selon la revendication 3, **caractérisé en ce que** le boîtier (14) comporte plusieurs segments pliables les uns par rapport aux autres (20) et **en ce que** les crochets d'encliquetage situés l'un en face de l'autre (26), à l'exception des parties d'extrémité (38) du boîtier (14), sont agencés sur un segment (20).

5. Manchon pare-feu selon l'une des revendications 2 ou 3, **caractérisé en ce que** des saillies de positionnement (44) sont prévues sur les crochets d'encliquetage (26, 34).

6. Manchon pare-feu selon l'une des revendications précédentes, **caractérisé en ce que** le boîtier (14) est muni d'évidements (46) pour des crochets d'encliquetage (34) qui sont montés sur le support (18).

7. Manchon pare-feu selon l'une des revendications précédentes, **caractérisé en ce que** la liaison par encliquetage s'étend au-dessus d'un espace (36) du boîtier (14) et enferme ainsi le boîtier (14) dans la direction circonférentielle.

8. Manchon pare-feu selon la revendication 7, **caractérisé en ce qu'**une butée (42) est prévue sur les extrémités du boîtier (14) situées l'une en face de l'autre dans l'espace (36) de telle sorte que les deux extrémités sont positionnées l'une par rapport à l'autre.

9. Manchon pare-feu selon l'une des revendications précédentes, **caractérisé en ce que** le support (18) est muni d'un trou oblong (30).
